# EUROPÄISCHE PATENTSCHRIFT

(11) **EP 1 414 549 B1**
(45) Veröffentlichungstag und Bekanntmachung des Hinweises auf die Patenterteilung: **14.06.2006**
(21) Anmeldenummer: 02740222.1
(22) Anmeldetag: 27.03.2002
(51) Int. Cl.: B01D 53/32

(54) **ANORDNUNG UND VERFAHREN ZUR REINIGUNG VON ABGASEN**
DEVICE AND METHOD FOR PURIFYING EXHAUST GAS
DISPOSITIF ET PROCEDE D'EPURATION DE GAZ D'ECHAPPEMENT

(30) Priorität: 27.03.2001 DE 10115175
(43) Veröffentlichungstag der Anmeldung: 06.05.2004
(73) Patentinhaber: Centrotherm Elektrische Anlagen GmbH & Co KG, 89143 Blaubeuren (DE)
(72) Erfinder: KRÖDEL, Gunter, 01445 Radebeul (DE); RESCH, Dietmar, 01109 Dresden (DE); STELZER, Horst, 01109 Dresden (DE); FABIAN, Lutz, 01217 Dresden (DE); SENG, Holger, 01139 Dresden (DE)
(74) Vertreter: Hudler, Frank
(86) Internationale Anmeldenummer: PCT/DE2002/001118
(87) Internationale Veröffentlichungsnummer: WO 2002/076583

(56) Entgegenhaltungen:
- EP-A- 0 847 794
- WO-A-00/77452
- US-A- 5 492 678
- PATENT ABSTRACTS OF JAPAN vol. 1998, no. 14, 31. Dezember 1998 (1998-12-31) & JP 10 249161 A (SHINMEIWA AUTO ENG LTD;DAIHEN CORP), 22. September 1998 (1998-09-22)

## Beschreibung

Die Erfindung betrifft eine Anordnung zur Reinigung von Abgasen, vorzugsweise aus Prozessen der Halbleitertechnik, mit einem Reaktionsraum, der mit mindestens einem Einlass für das zu reinigende Abgas versehen ist, wobei weiterhin mindestens ein Einlass für gasförmige Reaktionspartner und ein Auslass für die Reaktionsprodukte vorgesehen sind und bei der dem Reaktionsraum ein Wäscher zum Auswaschen von gasförmigen Schadstoffen, Aerosolen und Feststoffpartikeln nachgeordnet ist, wobei am oberen Ende des Reaktionsraumes eine Plasmaquelle mit einem Magnetron zur Einleitung von Mikrowellenergie in das Plasma der Plasmaquelle verbunden ist und wobei sich der Einlass für die gasförmigen Reaktionspartner an der Plasmaquelle befindet, sowie ein Verfahren zur Reinigung von Abgasen.

In bisher bekannt gewordenen Abgasreinigungsanlagen, insbesondere für die Reinigung von toxischen, oder zumindest umweltschädlichen Abgasen aus Halbleiterprozessen, werden die Abgase einer thermischen Behandlung in einer Flamme unterzogen und dort thermisch zersetzt oder auch oxidiert. Hierzu werden erhebliche Mengen an Brenngas, wie Erdgas, Flüssiggas, oder Wasserstoff und Sauerstoff verbraucht, so dass durch die benötigten Brenngase erhebliche Kosten entstehen.

Beispielsweise ist aus der EP 0 347 753 B1 ein Verfahren zur Reinigung von Abgasen aus Halbleiterprozessen und aus der EP 0 346 893 B1 eine Vorrichtung zur Reinigung von Abgasen aus Halbleiterprozessen bekannt geworden. Diese Vorrichtung besteht aus einem nach unten im wesentlichen geschlossenen und oben offenen Grundkörper mit kreisförmigem Querschnitt. Innerhalb dieses Grundkörpers befindet sich konzentrisch dazu eine Brennkammer. In die Brennkammer ragt von unten ein nach oben gerichteter Brenner zur thermischen Zersetzung bzw. Oxidation von toxischen Abgasen mit Hilfe eines gleichzeitig zugeführten Brenngases. Die Brennkammer wird nach oben hin durch einen Spritzschutz begrenzt, über dem sich eine Waschkammer befindet, der von oben ein Sorptionsmittel, z.B. Wasser, zugeführt wird. Die Zuführung des Sorptionsmittels erfolgt über eine Sprüheinrichtung mit der aus dem thermisch behandelten Abgas thermische Zersetzungsprodukte, Aerosole und feste Partikel sorbiert, oder herausgespült werden. Das Sorptionsmittel wird dann entlang der Innenwand des Grundkörpers nach unten geleitet und über einen Abfluss in einen Waschkreislauf geführt.

Um eine vollständige thermische Zersetzung oder Oxidation in der Gasphase zu erreichen, wird dem Abgas entsprechend dem in der EP 0 347 753 B1 beschriebenen Verfahren so viel Sauerstoff zugeführt, dass die thermische Zersetzung oder Oxidation in der Brennkammer dann unter Sauerstoffüberschuss erfolgen kann.

Eine ähnliche Vorrichtung zur Reinigung von Abgasen wird auch in der EP 0 803 042 B1 beschrieben. Hier wird allerdings in der Brennkammer eine Flamme erzeugt, die nach unten brennt. Der besondere Vorteil dieser Vorrichtung ist darin zu sehen, dass durch die Anordnung des Brenners die bei der thermischen Zersetzung oder Oxidation in der Gasphase entstehenden Partikel (z.B. SiO₂) nicht auf den Brenner fallen können.

Von Nachteil sind bei diesen Vorrichtungen und den mit diesen Vorrichtungen ausgeführten Verfahren, dass kostenintensive Brenngase, wie z.B. Sauerstoff und Wasserstoff, oder auch Erdgas, bzw. Flüssiggase, eingesetzt werden müssen.

Weiterhin wird in der WO-A-0077452 ein Abgasreinigungssystem zur Entsorgung von umweltschädlichen und/oder toxischen Abgasen oder Dämpfen in einem Reaktionsraum beschrieben. Der Reaktionsraum ist mit einer Plasmaquelle verbunden, wobei im Reaktionsraum durch eingekoppelte Anregungsenergie ein Plasma ausgebildet ist. Die gasförmigen Reaktionspartner werden in die Plasmaquelle eingeleitet, so dass die aktiven Teilchen des Plasmas nach unten in den Reaktionsraum getrieben werden. Um einen stabilen Betrieb des Plasmas zu erreichen, ist der Auslass des Reaktionsraumes mit einer Flüssigkeitsstrahlpumpe zur Erzeugung eines Unterdruckes verbunden. Der durch die Flüssigkeitsstrahlpumpe erzeugte Unterdruck lässt sich allerdings nur schwierig regeln.

Der Erfindung liegt deshalb die Aufgabe zugrunde, eine Anordnung und ein Verfahren zu schaffen, mit dem die Abgasreinigung deutlich kostengünstiger betrieben werden kann.

Die der Erfindung zugrundeliegende Aufgabenstellung wird bei einer Anordnung der eingangs genannten Art dadurch gelöst, dass im Gasauslass des Reaktionsraumes ein Ventil angeordnet ist, dass der Reaktionsraum über ein Ventil mit einer Vakuumpumpe verbindbar ist und dass der Reaktionsraum über ein Ventil belüftbar ist, so dass der Reaktionsraum und die Plasmaquelle bei geschlossenen Einlässen und geschlossenen Ventilen zumindest kurzzeitig zum Zünden des Plasmas in der Plasmaquelle mittels der Vakuumpumpe auf einen vorgegebenen Wert evakuierbar sind, so dass im Reaktionsraum ein Remoteplasma aus den aktiven Teilchen in der Plasmaquelle zur Reinigung der Abgase ausbildbar ist.

Die erfindungsgemäße Anordnung ermöglicht durch die Erzeugung des Remoteplasmas im Reaktionsraum und die Einleitung von Mikrowellenenergie in das Plasma eine besonders kostengünstige und effektive Reinigung von Abgasen aus beliebigen Prozessen, insbesondere von toxischen Abgasen aus Prozessen der Halbleitertechnik. Außerdem kann durch die Verwendung einer geeigneten Plasmaquelle das Plasma bei Normaldruck aufrechterhalten werden.

Eine weitere Ausgestaltung der Erfindung sieht vor, dass mit dem über den Einlass eingeleiteten gasförmigen Reaktionspartner eine von oben nach unten aus der Plasmaquelle gerichtete Gasströmung erzeugt wird, mit der die aktivierten Teichen des Plasmas in den Reaktionsraum getrieben werden und dort das Remoteplasma ausbilden.

Um eine möglichst große Reaktionsoberfläche für das Sorptionsmittel zu erreichen, ist der Innenraum des Wäschers zumindest teilweise mit Füllkörpern gefüllt.

Die der Erfindung zugrundeliegende Aufgabenstellung wird bei einem Verfahren zur Reinigung von Abgasen, vorzugsweise aus Halbleiterprozessen, bei dem die Abgase sowie gasförmige Reaktionspartner einem Reaktionsraum zugeleitet werden und bei dem die im Reaktionsraum erzeugten Reaktionsprodukte anschließend einem Wäscher zum Auswaschen von gasförmigen Schadstoffen, Aerosolen und Feststoffpartikeln zugeleitet werden, wobei im Reaktionsraum ein Remoteplasma ausgebildet wird, indem gasförmige Reaktionspartner zunächst in eine Plasmaquelle eingeleitet, dort in ein Plasma aus Radikalen und Ionen aufgespalten und in den Reaktionsraum getrieben werden, dass dem Remoteplasma im Reaktionsraum die Abgase unter Bildung von Radikalen und Ionen zugeführt werden, die mit den Radikalen und Ionen des gasförmigen Reaktionspartners reagieren und dass die festen, flüssigen und gasförmigen Reaktionsprodukte infolge eines Druckgefälles aus dem Reaktionsraum in den Wäscher geleitet werden, dadurch gelöst, dass die aus Plasmaquelle und Reaktionsraum bestehende Einheit zunächst auf einen Wert von < 50 mbar evakuiert und das Plasma in der Plasmaquelle gezündet wird, dass nach dem Zünden im Reaktionsraum Normaldruck eingestellt wird und dass anschließend die gasförmigen Reaktionspartner und danach das zu behandelnde Abgas in den Reaktionsraum geleitet werden.

Auf diese Weise wird erreicht, dass die Behandlung der Abgase im Reaktionsraum unter Normaldruck erfolgen kann.

Die Erfindung wird nachfolgend unter Bezug auf die Zeichnungsfigur an einem Ausführungsbeispiel näher erläutert.

Die Anordnung zur Abgasreinigung besteht aus einem Reaktionsraum 4, der am oberen Ende mit einer Plasmaquelle 3 und am unteren Ende über ein Ventil 10 mit einem Wäscher 12 verbunden ist. Zur Einkopplung von Mikrowellenenergie ist die Plasmaquelle 3 über einen E/H Tuner 2 mit einem Magnetron 1 gekoppelt.

Über einen Einlass 6 wird ein gasförmiger Reaktionspartner in der Menge eingespeist, dass die aktiven Teilchen des Plasmas nach unten in den Reaktionsraum 4 getrieben werden. Im Reaktionsraum kann sich dadurch ein Remoteplasma ausbilden.

Weiterhin ist ein Abgaseinlass 5 vorgesehen, so dass das Abgas in den Reaktionsraum 4 eingespeist werden kann, wo es mit den aktivierten Teilchen des Plasmas zusammentrifft, wobei selbst stabile Verbindungen aufgebrochen werden. Die hierbei entstehenden Radikale bzw. Ionen reagieren mit dem als Reaktionspartner zugegebenen Gas, das infolge der Plasmawirkung ebenfalls zumindest zum Teil in Radikale bzw. Ionen aufgespalten wird. Durch Zugabe eines Reaktionspartners zum Abgas wird eine Rekombination des Abgases zu den Ausgangsverbindungen verhindert.

Die Reaktionsprodukte, die sowohl gasförmig, flüssig, als auch fest sein können, werden aufgrund des Druckgefälles weiter nach unten transportiert und gelangen schließlich in den Wäscher 12, nachdem sie ein Ventil 10 passiert haben. Im Wäscher 12 wird das Abgas weiter behandelt, indem es intensiv durch den Sprühkegel der Kreislaufdüse 11 und die Füllkörper 13 mit einer Waschflüssigkeit in Kontakt gebracht wird. Am Ausgang des Wäschers 12 gelangt das gereinigte Abgas in ein Vorratsgefäß 16, das größtenteils mit der Waschflüssigkeit gefüllt ist und über einen Tröpfchenabscheider 20, einen Sprühkegel einer Wasserdüse 19 und einen Aerosolfilter 18 an den Anschluss der Absaugung 17 und schließlich in eine nicht dargestellte zentrale Absaugung.

Um das Plasma zu Zünden, wird die Plasmaquelle 3 und der Reaktionsraum 4 zunächst auf einen Druck von < 50 mbar evakuiert. Das wird dadurch realisiert, dass der Einlass des gasförmigen Reaktionspartners 6 und der Abgaseinlass 5 über nicht dargestellte Ventile abgesperrt werden. Außerdem werden die Ventile 7 und 10 geschlossen. Anschließend wird das Ventil 8 geöffnet und die mit diesem Ventil verbundene Vakuumpumpe 9 eingeschaltet. Nach Erreichen des vorgegebenen Druckes (<50mbar) kann das Plasma gezündet werden. Anschließend wird das Ventil 8 wieder geschlossen, die Vakuumpumpe 9 ausgeschaltet und das zum Belüften vorgesehene Ventil 7 geöffnet. Gleichzeitig wird über den E/H-Tuner 2 das Magnetron 1 den sich ändernden Bedingungen angepasst, die Mikrowellenenergie in das Plasma eingeleitet und somit das Aufrechterhalten des Plasmas unter Normaldruck ermöglicht. Nach Erreichen des Normaldruckes können die Reaktionspartner und nachfolgend das zu reinigende Abgas eingespeist werden.

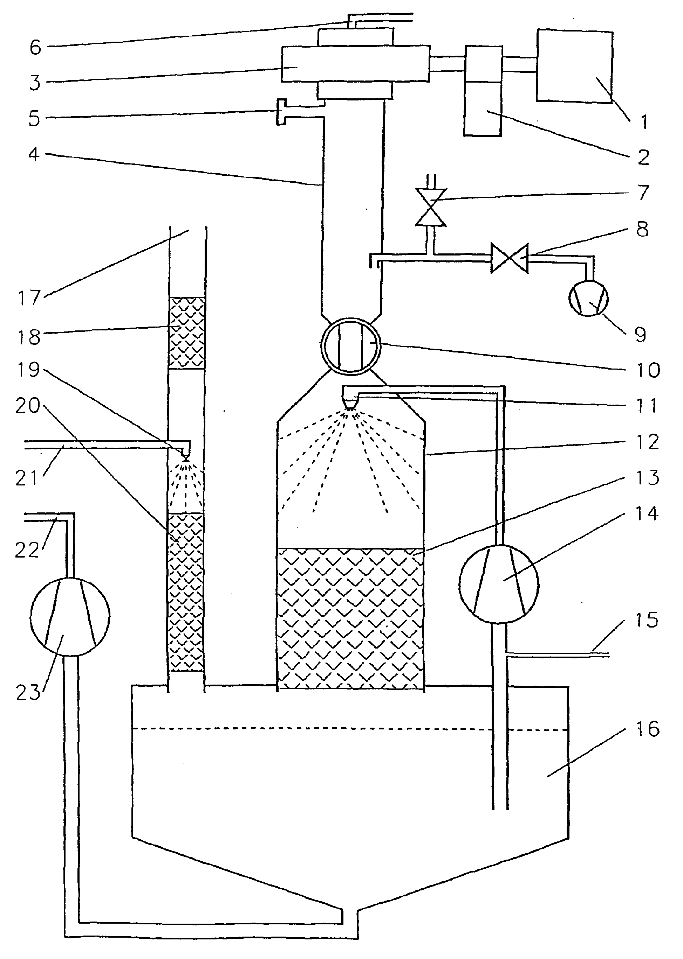

## Patentansprüche

1. Anordnung zur Reinigung von Abgasen, vorzugsweise aus Prozessen der Halbleitertechnik, mit einem Reaktionsraum 4), der mit mindestens einem Einlass für das zu reinigende Abgas versehen ist, wobei weiterhin mindestens ein Einlass (6) für gasförmige Reaktionspartner und ein Auslass für die Reaktionsprodukte vorgesehen sind und bei der dem Reaktionsraum (4) ein Wäscher (12) zum Auswaschen von gasförmigen Schadstoffen, Aerosolen und Feststoffpartikeln nachgeordnet ist, wobei am oberen Ende des Reaktionsraumes (4) eine Plasmaquelle (3) angeordnet ist, die Plasmaquelle (3) mit einem Magnetron (1) zur Einleitung von Mikrowellenergie in das Plasmas der Plasmaquelle (3) verbunden ist und wobei sich der Einlass (6) für die gasförmigen Reaktionspartner an der Plasmaquelle (3) befindet, **dadurch gekennzeichnet, dass** im Gasauslass des Reaktionsraumes (4) ein Ventil (10) angeordnet ist, dass der Reaktionsraum (4) über ein Ventil (8) mit einer Vakuumpumpe (9) verbindbar ist und dass der Reaktionsraum (4) über ein Ventil (7) belüftbar ist, so dass der Reaktionsraum (4) und die Plasmaquelle (3) bei geschlossenen Einlässen (5, 6) und geschlossenen Ventilen (7, 10) zumindest kurzzeitig zum Zünden des Plasmas in der Plasmaquelle (3) mittels der Vakuumpumpe (9) auf einen vorgegebenen Wert evakuierbar sind, so dass im Reaktionsraum (4) ein Remoteplasma aus den aktiven Teilchen in der Plasmaquelle (3) zur Reinigung der Abgase ausbildbar ist.

2. Anordnung nach Anspruch 1, **dadurch gekennzeichnet, dass** in der gesamten Anordnung, bestehend aus Plasmaquelle (3), Reaktionsraum (4), Wäscher (12) und Vorratsbehälter (16) ein von oben nach unten gerichtetes Druckgefälle einstellbar ist.

3. Anordnung nach Anspruch 1 oder 2, **dadurch gekennzeichnet, dass** mit dem über den Einlass (6) eingeleiteten gasförmigen Reaktionspartner eine von oben nach unten aus der Plasmaquelle (3) gerichtete Gasströmung erzeugt wird, mit der die aktivierten Teichen des Plasmas in den Reaktionsraum (4) getrieben werden und dort das Remoteplasma ausbilden.

4. Anordnung nach einem der Ansprüche 1 bis 3, **dadurch gekennzeichnet, dass** der Innenraum des Wäschers (12) zumindest teilweise mit Füllkörpern (13) gefüllt ist.

5. Verfahren zur Reinigung von Abgasen, vorzugsweise aus Halbleiterprozessen, bei dem die Abgase sowie gasförmige Reaktionspartner einem Reaktionsraum (4) zugeleitet werden und dass die festen, flüssigen und gasförmigen Reaktionsprodukte infolge eines Druckgefälles aus dem Reaktionsraum (4) in den Wäscher (12) geleitet werden und gasförmige Schadstoffe, Aerosole und Feststoffe ausgewaschen werden, wobei im Reaktionsraum (4) ein Remoteplasma ausgebildet wird, indem gasförmige Reaktionspartner zunächst in der Menge in eine Plasmaquelle (3) eingeleitet, dort in ein Plasma aus Radikalen und Ionen aufgespalten und dass die aktiven Teilchen des Plasmas nach unten in den Reaktionsraum (4) getrieben werden, dass dem Remoteplasma im Reaktionsraum (4) die Abgase unter Bildung von Radikalen und Ionen zugeführt werden, die mit den Radikalen und Ionen des gasförmigen Reaktionspartners reagieren, **dadurch gekennzeichnet, dass** die aus Plasmaquelle (3) und Reaktionsraum (4) bestehende Einheit zunächst auf einen Wert von < 50 mbar evakuiert und das Plasma in der Plasmaquelle (3) gezündet wird, dass nach dem Zünden des Plasmas im Reaktionsraum Normaldruck eingestellt wird und dass anschließend die gasförmigen Reaktionspartner und nachfolgend das zu behandelnde Abgas in den Reaktionsraum (4) geleitet werden.

## Claims

1. Arrangement for the purification of waste gases, particularly from semiconductor technology processes, with a reaction chamber (4) that is provided with at least one inlet for the waste gas that is to be purified, and further at least one inlet (6) is provided for gaseous reactants and an outlet is provided for the reaction products, and in which a scrubber (12) for scrubbing gaseous pollutants, aerosols and solid particulates is situated downstream of the reaction chamber (4) and where a plasma source (3) is located at the upper end of the reaction chamber (4), which plasma source (3) is connected to a magnetron (1) for the introduction of microwave energy into the plasma of the plasma source (3) and where the inlet (6) for the gaseous reactants is found at the plasma source (3), **characterised in that** a valve (10) is arranged in the gas outlet of the reaction chamber (4); **in that** the reaction chamber (4) can be connected with a vacuum pump (9) via a valve (8); and **in that** the reaction chamber (4) can be ventilated by a valve (7) so that the reaction chamber (4) and the plasma source (3) can be evacuated to a specified value for a short period of time at least with closed inlets (5, 6) and closed valves (7, 10) for the purpose of igniting the plasma in the plasma source (3) using the vacuum pump (9) so that a remote plasma can be formed in the reaction chamber (4) from the active particles in the plasma source (3) for purification of the waste gases.

2. Arrangement according to Claim 1, **characterised in that** in the entire arrangement consisting of a plasma source (3), a reaction chamber (4), a scrubber (12) and a reservoir (16), a pressure drop can be set.

3. Arrangement according to Claim 1 or 2, **characterised in that** when the gaseous reactant is introduced via the inlet (6), a downward gas current is generated from the plasma source (3) with which the activated particles of the plasma are forced into the reaction chamber (4) and there form the remote plasma.

4. Arrangement according to one of Claims 1 to 3, **characterised in that** the interior of the scrubber (12) is at least partially filled with carrier material.

5. Procedure for the purification of waste gases, particularly from semiconductor processes, in which the waste gases as well as the gaseous reactants are fed into a reaction chamber (4) and the solid, liquid and gaseous reaction products are guided out of the reaction chamber (4) into the scrubber (12) due to a pressure drop and gaseous pollutants, aerosols and solids are scrubbed, where, in the reaction chamber (4), a remote plasma is formed as a result of a quantity of gaseous reactants initially being introduced into a plasma source (3), split up there into a plasma composed of radicals and ions and the active particles of the plasma being forced down into the reaction chamber (4), and waste gases are fed to the remote plasma in the reaction chamber (4) with the formation of radicals and ions which react with the radicals and ions of the gaseous reactant, **characterised in that** the unit consisting of the plasma source (3) and the reaction chamber (4) is initially evacuated to a level of < 50 mbar and the plasma in the plasma source (3) is ignited; **in that** after ignition of the plasma in the reaction chamber, normal pressure is set; and **in that** afterwards the gaseous reactants and subsequently the waste gas to be treated are guided into the reaction chamber (4).

## Revendications

1. Configuration destinée à l'épuration d'effluents gazeux, de préférence issus de processus afférents aux techniques des semi-conducteurs, comprenant une chambre de réaction (4) dotée d'au moins un orifice d'admission de l'effluent gazeux à épurer, sachant en outre qu'au moins un orifice d'admission (6) des agents réactifs gazeux et un orifice de sortie pour les produits issus de la réaction ont été prévus, et configuration dans laquelle un laveur (12), destiné à ôter par lavage les substances nocives gazeuses, les aérosols et particules solides, a été monté en aval de la chambre de réaction (4), sachant qu'à l'extrémité supérieure de la chambre de réaction (4) a été disposée une source de plasma (3), que cette source de plasma (3) est reliée à un magnétron (1) servant à injecter l'énergie des micro-ondes dans le plasma de la source de plasma (3), et sachant que l'orifice d'entrée (6) des agents réactifs gazeux se trouve contre la source de plasma (3), **caractérisée en ce que** dans l'orifice de sortie du gaz équipant la chambre de réaction (4) est disposée une vanne (10), que la chambre de réaction (4) est reliable à une pompe à vide (9) via une vanne (8) et que la chambre de réaction (4) peut être aérée par le biais d'une vanne (7), de sorte que la chambre de réaction (4) et la source de plasma (3) puissent, orifices d'admission (5, 6) fermés et vannes d'admission (7, 10) fermées, être soumises au moins brièvement à un vide d'une valeur spécifiée, par le biais de la pompe à vide (9), pour enflammer le plasma dans la source de plasma (3) et afin que, dans la chambre de réaction (4), un plasma distant formé des particules actives présentes dans la source de plasma (3), soit formable pour épurer les effluents gazeux.

2. Configuration selon la revendication 1, **caractérisée en ce que** dans l'ensemble de la configuration composée de la source de plasma (3), de la chambre de réaction (4), du laveur (12) et du réservoir de stockage (16), il est possible de régler un gradient de pression orienté vers le bas.

3. Configuration selon la revendication 1 ou 2, **caractérisée en ce que**, à l'aide de l'agent réactif gazeux introduit via l'orifice d'admission (6), on génère depuis la source de plasma (3) un flux de gaz orienté du haut vers le bas, flux qui entraîne vers la chambre de réaction (4) les particules de plasma activées où elles forment le plasma distant.

4. Configuration selon l'une des revendications 1 à 3, **caractérisée en ce que** la chambre intérieure du laveur (12) est remplie au moins en partie par des corps de remplissage (13).

5. Procédé d'épuration d'effluents gazeux issus de préférence des processus afférents aux semi-conducteurs, dans lequel les effluents gazeux ainsi que les agents réactifs gazeux sont envoyés dans une chambre de réaction (4), sachant que les produits de réaction solides, liquides et gazeux sont conduits, en raison d'un gradient de pression, hors de la chambre de réaction (4) pour gagner le laveur (12), et les substances nocives gazeuses, les aérosols et matières solides sont évacués par lavage, sachant que dans la chambre de réaction (4) se forme un plasma distant par le fait que des agents de réaction gazeux sont envoyés dans un premier temps en quantité dans une source de plasma (3), qu'ils sont fractionnés une fois là en un plasma composé de radicaux et d'ions et que les particules actives du plasma sont entraînées vers le bas dans la chambre de réaction (4), sachant qu'au plasma distant présent dans la chambre de réaction (4) sont apportés les effluents gazeux avec formation de radicaux et d'ions qui réagissent avec les radicaux et ions de l'agent réactif gazeux, **caractérisé en ce que** l'unité composée de la source de plasma (3) et de la chambre de réaction (4) est dans un premier temps mise sous un vide atteignant une valeur de < 50 mbar, et que le plasma présent dans la source de plasma (3) est allumé, **en ce qu'**après l'allumage du plasma a lieu un réglage de la chambre de réaction sur la pression atmosphérique standardisée et qu'ensuite les agents réactifs gazeux et à leur suite l'effluent gazeux à traiter sont conduits dans la chambre de réaction (4).
